**(19)** Europäisches Patentamt
European Patent Office
Office européen des brevets

**(11)** **EP 0 863 459 A1**

**(12)** **EUROPÄISCHE PATENTANMELDUNG**

**(43)** Veröffentlichungstag:
**09.09.1998 Patentblatt 1998/37**

**(51)** Int. Cl.$^6$: **G06F 7/552**, G06F 7/72

**(21)** Anmeldenummer: **98200562.1**

**(22)** Anmeldetag: **23.02.1998**

**(84)** Benannte Vertragsstaaten:
**AT BE CH DE DK ES FI FR GB GR IE IT LI LU MC NL PT SE**

**(30)** Priorität: **06.03.1997 DE 19709106**

**(71)** Anmelder:
• **Philips Patentverwaltung GmbH**
**22335 Hamburg (DE)**
Benannte Vertragsstaaten:
**DE**
• **Koninklijke Philips Electronics N.V.**
**5621 BA Eindhoven (NL)**
Benannte Vertragsstaaten:
**FR GB IT**

**(72)** Erfinder:
• **Malzahn, Ralf**
**Röntgenstrasse 24, 22335 Hamburg (DE)**
• **Quisquater, Jean-Jaques, Prof.**
**Röntgenstrasse 24, 22335 Hamburg (DE)**

**(74)** Vertreter:
**Poddig, Dieter, Dipl.-Ing. et al**
**Philips Patentverwaltung GmbH,**
**Röntgenstrasse 24**
**22335 Hamburg (DE)**

**(54)** **Rechenschaltung zum Berechnen eines Quadrats**

**(57)** Für die Berechnung des Quadrats einer Zahl mit vielen Stellen durch eine Rechenschaltung, die für die parallele Verarbeitung von Zahlen mit einer wesentlich geringeren Stellenzahl ausgelegt ist, wird die zu quadrierende Zahl in Teilzahlen mit einer Stellenzahl entsprechend der Rechenschaltung aufgeteilt, und die einzelnen Teilzahlen werden nacheinander verarbeitet. Für eine beschleunigte Verarbeitung bei der Quadrierung ist vorgesehen, daß die in der Rechenschaltung vorhandene Multiplizierschaltung eine Stellenverschiebungs-Schaltung enthält, durch die bei Multiplikation von bestimmen Paaren von Teilzahlen eine Stellenverschiebung um eine Stelle nach links entsprechend einer Multiplikation mit dem Faktor 2 möglich ist. Dadurch kann die Quadrierung mit weniger Aufwand erfolgen. Weiterhin wird ein nach diesem Schema arbeitendes Verfahren zur Bildung des Quadrats einer großen Zahl modulo einer anderen großen Zahl beschrieben.

**Beschreibung**

Die Erfindung betrifft eine Rechenschaltung zum Berechnen des Quadrats einer Zahl. Die Bildung des Quadrats entspricht der Multiplikation von zwei Zahlen, wobei beide Zahlen gleich sind.

Für die Multiplikation von zwei Zahlen sind Multiplizierschaltungen bekannt, die zwei Eingänge aufweisen, denen die zu multiplizierenden Zahlen zugeführt werden, und einen Ausgang, der das Produkt abgibt. Dabei können mehrstellige Zahlen parallel verarbeitet werden, so daß eine Multiplikation schnell durchgeführt werden kann. Dies gilt zumindest, solange die Anzahl der Stellen bzw. die Wortbreite der zu multiplizierenden Zahlen nicht größer als die Anzahl Bits, die ein Multiplizierer parallel verarbeiten kann. Der Aufwand für Multiplizierschaltungen steigt ganz erheblich mit wachsender Anzahl von Stellen, die parallel verarbeitet werden. Daher werden für viele Anwendungen Multiplizierer für die Verarbeitung von Datenwörtern bestimmter Länge, insbesondere für 8-Bit-Datenwörter oder Bytes bzw. ein Mehrfaches davon verwendet, wobei die beiden Eingänge des Multiplizierers für unterschiedliche Wortbreiten eingerichtet sein können.

In manchen Anwendungsfällen sind die zu verarbeitenden Datenwörter jedoch wesentlich länger, beispielsweise bei der Verschlüsselung von Datenströmen durch Schlüssel mit hoher Stellenzahl, um eine hohe Sicherheit der Verschlüsselung zu erreichen. Für die Verarbeitung solcher großen Zahlen werden diese in aufeinanderfolgende Abschnitte bzw. Teilwörter mit gleicher Stellenzahl von einem oder mehreren Byte Länge aufgeteilt, und die einzelnen Teilzahlen werden nacheinander verarbeitet. Dies erfordert mehr Zeit, jedoch bleibt der erforderliche Aufwand begrenzt. Dieser Aufwand umfaßt zusätzlich einen Addierer, der mit dem Ausgang des Multiplizierers gekoppelt ist, sowie ein Register für eine Anzahl Teilzahlen entsprechend dem Produkt der zu multiplizierenden großen Zahlen. Ferner ist eine Steuerschaltung erforderlich, die das Zuführen der einzelnen Teilzahlen und das stellenrichtige Addieren der einzelnen vom Multiplizierer gelieferten Zwischenprodukte bzw. Teilprodukte zu den im Register gespeicherten Teilergebnissen steuert.

Aufgabe der Erfindung ist es, bei einer Rechenschaltung der angegebenen Art für die Verarbeitung von großen Zahlen, die aus mehreren Teilzahlen bestehen, die Rechenzeit bei der Bildung des Quadrats einer solchen Zahl zu verringern.

Diese Aufgabe wird dadurch gelöst, daß die Multiplizierschaltung eine steuerbare Verschiebungsschaltung enthält, die zwischen einem der Eingänge und dem Ausgang angeordnet ist, um wahlweise eine Stellenverschiebung um eine Stelle nach links entsprechend einer Multiplikation mit dem Faktor 2 oder keine Stellenverschiebung vorzunehmen, und daß die Steuerschaltung eingerichtet ist, um für jede dem einen Eingang der Multiplizierschaltung zugeführte erste Teilzahl dem anderen Eingang nacheinander nur eine zweite Teilzahl gleicher oder höherer Wertigkeit zuzuführen und beim Zuführen einer zweiten Teilzahl mit höherer Wertigkeit als die der ersten Teilzahl die Verschiebungsschaltung auf eine Stellenverschiebung um eine Stelle nach links umzuschalten.

Bei dieser Lösung wird ausgenutzt, daß bei der Multiplikation der einzelnen Teilzahlen die Paare von Teilzahlen unterschiedlicher Wertigkeit, die miteinander multipliziert werden, jeweils zweifach auftauchen und somit nur einmal berechnet werden müssen. Daher braucht diese Multiplikation nur einmal ausgeführt zu werden, und außerdem werden dabei Addieroperationen eingespart. Dies führt zu einer wesentlichen Beschleunigung der Berechnung des Quadrats einer großen Zahl, wobei nur ein geringer zusätzlicher Aufwand in Form der Verschiebungsschaltung erforderlich ist.

Bei vielen kryptologischen Verschlüsselungsverfahren werden Berechnungen der zu verschlüsselnden Daten modulo einer bestimmten festen Zahl durchgeführt, so daß die Ergebnisse eine begrenzte Stellenzahl kleiner als beispielsweise das Produkt von zwei großen Zahlen bzw. das Quadrat einer großen Zahl haben. Ein solches Verfahren ist beispielsweise das RSA-Verschlüsselungsverfahren. Für die Berechnung des Quadrats einer ersten großen Zahl modulo einer zweiten großen Zahl ist nach einer Ausgestaltung der Erfindung die Steueranordnung in der Rechenschaltung eingerichtet, um nach je einer ersten Multiplikation einer ersten Teilzahl mit allen zweiten Teilzahlen gleicher und höherer Wertigkeit, beginnend mit der ersten Teilzahl höchster Wertigkeit, zur Bildung je eines ersten Produkts dem einen Eingang des Multiplizierers die Teilzahl höchster Wertigkeit des ersten Produkts und dem anderen Eingang nacheinander die Teilzahlen des Zweierkomplements der zweiten Zahl zuzuführen zur Bildung eines zweiten Produkts aus Teilprodukten aufeinanderfolgender Wertigkeiten, und den Addierer und das Register anzusteuern, um die Teilprodukte stellenrichtig zu dem Inhalt der der Wertigkeit entsprechenden Registerzelle zu addieren. Diese Ausgestaltung verbindet die beschriebene Methode der Bildung des Quadrats einer langen Zahl mit einer Methode von Modulo-Berechnungen, die aus der EP 443 679 A1 abgeleitet werden kann.

Bei dieser Ausgestaltung der Erfindung kann ein Übertrag auftreten, wenn die Teilzahl zweithöchster Wertigkeit des ersten Produkts zur höchstwertigen Teilzahl des zweiten Produkts addiert wird. Um in diesem Falle den weiteren Rechengang möglichst wenig zu beeinträchtigen, ist es zweckmäßig, daß beim Auftreten eines solchen Übertrags die zweite Zahl von der Summe subtrahiert wird. Dies kann auf einfache Weise dadurch geschehen, daß das Zweierkomplement der zweiten Zahl zur Summe addiert wird.

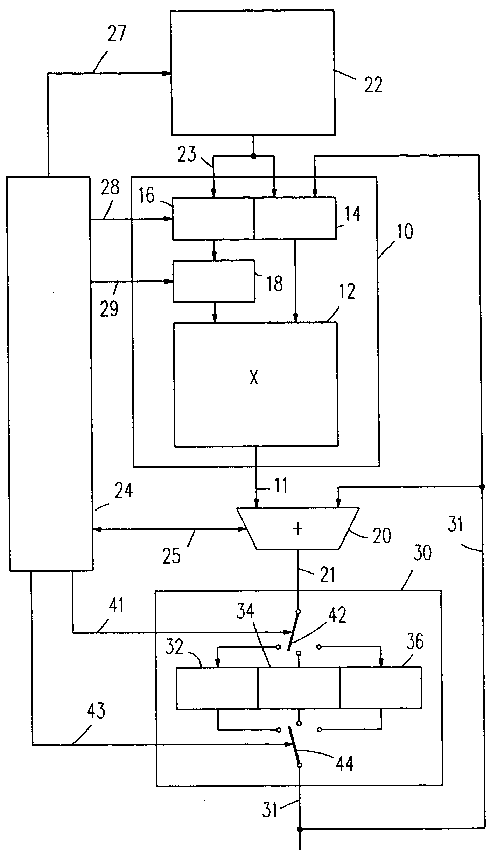

Ein Ausführungsbeispiel der Erfindung wird nachfolgend anhand der Zeichnung näher erläutert.

Darin enthält eine Multiplizierschaltung 10 einen Multiplizierer 12 zum parallelen Multiplizieren von zwei Mehrbit-Datenwörtern, die zwei Eingängen zugeführt werden, zur Erzeugung eines Mehrbit-Produkts am Ausgang 11 mit einer Anzahl Bits, die der Summe der Bitzahlen der zugeführten Datenwörter entspricht. Dem einen Eingang des Multiplizierers 12 ist ein Register 14 vorgeschaltet, und dem anderen Eingang ist die Reihenschaltung eines Registers 16 und einer Verschiebungsschaltung 18 vorgeschaltet. Die Register 14 und 16 sowie die Verschiebungsschaltung 18 werden von einer Steuerschaltung 24 über die Verbindungen 28 und 29 gesteuert. Die Steuerschaltung ist beispielsweise ein programmierter Mikroprozessor bzw. der Kern eines Mikroprozessors.

Die Steuerschaltung 24 steuert über eine Verbindung 27 außerdem einen Speicher 22 an, der wenigstens eine erste Zahl und eine zweite Zahl enthält, die beide je aus einer Anzahl Teilzahlen mit aufeinanderfolgender Wertigkeit bestehen. Es wird angenommen, daß an jeder Adresse des Speichers 22, die über die Verbindung 27 ausgewählt werden kann, eine Teilzahl gespeichert ist, die über einen Ausgang 23 abgegeben wird.

Dieser Ausgang 23 ist mit einem Eingang des Registers 16 und einem Eingang des Registers. 14 verbunden, wobei letzteres hier noch einen weiteren Eingang aufweist, der mit einer Leitung 31 verbunden ist. Statt dessen kann dem Register 14 auch ein (nicht dargestellter) Multiplexer vorgeschaltet werden, der die Leitungen 23 und 31 auf eine Leitung zusammenführt, so daß das Register 14 dann auch nur einen Eingang hätte. Die Steuerschaltung 24 steuert über die Verbindung 28, ob ein am Ausgang 23 vom Speicher 22 abgegebenes Datenwort in das Register 14 oder das Register 16 oder ob in das Register 14 ein auf der Leitung 31 vorhandenes Datenwort eingeschrieben wird. Ferner bestimmt die Steuerschaltung 24 über die Verbindung 29, ob das im Register 16 vorhandene Datenwort über die Verschiebungsschaltung 18 direkt oder um eine Stelle höher verschoben entsprechend einer Multiplikation mit dem Faktor 2 zugeführt wird.

Der Ausgang 11 führt auf einen Eingang eines Addierers 20, der vorzugsweise als ALU ausgeführt ist und, wenn die Steuerschaltung 24 durch einen Mikroprozessor gebildet wird, in diesem enthalten sein kann. In diesem Beispiel ist der Addierer 20 der Übersichtlichkeit halber getrennt dargestellt.

Ein zweiter Eingang des Addierers 20 ist ebenfalls mit der Leitung 31 verbunden, und ein Ausgang 21 des Addierers führt auf ein Register 30, das drei Registerzellen 32, 34 und 36 für die Aufnahme je eines Datenworts enthält. Die Verbindung 21 führt im Register auf einen Umschalter oder Selektor 42, der über eine Verbindung 41, von der Steuerschaltung 24 gesteuert, die Leitung 21 mit einem Eingang der Speicherzelle 32, 34 oder 36 verbindet. Entsprechend ist ein Selektor 44 verbunden, der über eine Verbindung 43, von der Steuerschaltung 24 gesteuert, einen Ausgang der Speicherzelle 32, 34 oder 36 mit der Leitung 31 verbindet.

Für eine Erläuterung der Funktion der dargestellten Rechenschaltung wird zunächst das Prinzip der Quadrierung einer Langzähl X mit einer großen Anzahl von Stellen beschrieben, die als eine Summe von Teilzahlen $X_n$, $X_{n-1}$ ... $X_0$ dargestellt werden kann, wobei jede Teilzahl $X_i$ eine Anzahl k Stellen bzw. Bit umfaßt. Wenn eine Basis $b = 2^k$ definiert wird, kann die Langzahl X folgendermaßen dargestellt werden:

$$X = X_n \cdot b^n + X_{n-1} \cdot b^{n-1} + ... + X_1 \cdot b^1 + X_0$$

Dabei stellt $b^i$ die Wertigkeit der jeweiligen Teilzahl dar. Diese Darstellung der Langzahl geht davon aus, daß deren Verarbeitung in einer Rechenschaltung erfolgt, die solche Teilzahlen parallel verarbeiten kann.

Die Bildung des Quadrats einer solchen Langzahl kann auf folgende Weise dargestellt werden:

$$(X_n \cdot b^n + X_{n-1} \cdot b^{n-1} + ... + X_1 \cdot b^1 + X_0) \cdot (X_n \cdot b^n + X_{n-1} \cdot b^{n-1} + ... + X_1 \cdot b^1 + X_0)$$

Daraus ist zu erkennen, daß für die Durchführung der Quadrierung alle Felder der folgenden Matrix berechnet werden müssen, wobei die Potenzen von b einer stellenrichtigen Addition und i bzw. j der ersten bzw. zweiten Teilzahl entsprechender Wertigkeit entsprechen.

| | $i=0$ | $i=1$ | $i=2$ | $i=3$ | $\ldots$ | $i=n$ |
|---|---|---|---|---|---|---|
| $j=0$ | $X_0^2$ | $X_1 \cdot X_0 \cdot b$ | $X_2 \cdot X_0 \cdot b^2$ | $X_3 \cdot X_0 \cdot b^3$ | .... | $X_n \cdot X_0 \cdot b^n$ |
| $j=1$ | $X_0 \cdot X_1 \cdot b$ | $X_1^2 \cdot b^2$ | $X_2 \cdot X_1 \cdot b^3$ | $X_3 \cdot X_1 \cdot b^4$ | .... | $X_n \cdot X_1 \cdot b^{n+1}$ |
| $j=2$ | $X_0 \cdot X_2 \cdot b^2$ | $X_1 \cdot X_2 \cdot b^3$ | $X_2^2 \cdot b^4$ | $X_3 \cdot X_2 \cdot b^5$ | .... | $X_n \cdot X_2 \cdot b^{n+2}$ |
| $j=3$ | $X_0 \cdot X_3 \cdot b^3$ | $X_1 \cdot X_3 \cdot b^4$ | $X_2 \cdot X_3 \cdot b^5$ | $X_3^2 \cdot b^6$ | .... | $X_n \cdot X_3 \cdot b^{n+3}$ |
| $\ldots$ | .... | .... | .... | .... | .... | .... |
| $j=n$ | $X_0 \cdot X_n \cdot b^n$ | $X_1 \cdot X_n \cdot b^{n+1}$ | $X_2 \cdot X_n \cdot b^{n+2}$ | $X_3 \cdot X_n \cdot b^{n+3}$ | .... | $X_n \cdot b^{2n}$ |

Da bei einer skalaren Multiplikation, um die es sich hier nur handelt, die Reihenfolge der Faktoren nicht von Bedeutung ist, läßt sich die Quadrierung in Form der folgenden, nur halb besetzten Matrix darstellen.

| | $i=0$ | $i=1$ | $i=2$ | $i=3$ | $\ldots$ | $i=n$ |
|---|---|---|---|---|---|---|
| $j=0$ | $X_0^2$ | $2X_1 \cdot X_0 \cdot b$ | $2X_2 \cdot X_0 \cdot b^2$ | $2X_3 \cdot X_0 \cdot b^3$ | .... | $2X_n \cdot X_0 \cdot b^n$ |
| $j=1$ | | $X_1^2 \cdot b^2$ | $2X_2 \cdot X_1 \cdot b^3$ | $2X_3 \cdot X_1 \cdot b^4$ | .... | $2X_n \cdot X_1 \cdot b^{n+1}$ |
| $j=2$ | | | $X_2^2 \cdot b^4$ | $2X_3 \cdot X_2 \cdot b^5$ | .... | $2X_n \cdot X_2 \cdot b^{n+2}$ |
| $j=3$ | | | | $X^2 \cdot b^6$ | .... | $2X_n \cdot X_3 \cdot b^{n+3}$ |
| $\ldots$ | | | | | .... | .... |
| $j=n$ | | | | | | $X_n^2 \cdot b^{2n}$ |

Daraus ist zu erkennen, daß eine schnellere Bildung des Quadrats möglich ist, wenn eine Multiplizierschaltung verwendet wird, die es erlaubt, einen der Faktoren zusätzlich mit dem Faktor 2 zu multiplizieren. Dies kann in sehr einfacher Weise dadurch geschehen, daß einer der Faktoren um eine Bit-Stelle nach links verschiebbar ist, was einer Multiplikation mit 2 entspricht. Dies wird in der dargestellten Rechenschaltung durch die Verschiebungsschaltung 18 realisiert, wobei aus der vorstehenden Erläuterung erkennbar ist, daß diese Verschiebungsschaltung 18 auch zwischen dem Register 14 und dem entsprechenden Eingang des Multiplizierers 12 angeordnet sein kann. Grundsätzlich kann diese Verschiebungsschaltung auch am Ausgang des Multiplizierers 12 angeordnet sein, jedoch ist die Schaltung dann für die doppelte Bitzahl auszuführen.

Das Ergebnis der durch die Matrix dargestellten Berechnung, also das Quadrat einer Langzahl mit (n+k) Bit, wird dann erhalten, indem die Teilprodukte in den einzelnen Feldern der Matrix mit derselben Wertigkeit, d.h. mit derselben Potenz von b, addiert werden. Um jedoch eine minimale Anzahl von Übertragungen von Datenwörtern aus dem Speicher 22 zur Multiplizierschaltung 10 zu erhalten, ist es zweckmäßig, die einzelnen Teilprodukte der Matrix zeilenweise bzw. spaltenweise zu bestimmen, wobei eine stellenrichtige Addition der Teilprodukte im Addierer 20 durch entsprechende Ansteuerung der Registerzellen 32, 34 oder 36 durch die Steuerschaltung 24 erfolgt. Es ist klar, daß die Anzahl Registerzellen im Register 30 entsprechend der Stellenzahl der zu verarbeitenden Langzahlen gewählt werden muß. Da die einzelnen Teilprodukte am Ausgang 11 der Multiplizierschaltung 10 die doppelte Stellenzahl haben wie eine Teilzahl, muß entweder der Addierer 20 und jede der Registerzellen 32, 34, 36 für diese Stellenzahl des Teilprodukts ausgelegt sein, oder der Addierer 20 und die Registerzellen 32, 34, 36 haben die Lange einer Teilzahl, wobei dann jedes Teilprodukt in zwei Schritten verarbeitet werden muß, was mehr Zeit, jedoch weniger Aufwand erfordert. Im letzteren Fall ist die Anzahl der Registerzellen doppelt so groß wie die Anzahl Teilzahlen der Langzahl. In jedem Fall hat das Ergebnis, also das Quadrat der Langzahl, die doppelte Anzahl Stellen wie die Langzahl.

Insbesondere bei kryptologischen Verschlüsselungsoperationen werden Berechnungen und insbesondere auch Quadrierungen modulo einer Zahl durchgeführt, die für hohe Sicherheitsanforderungen an die Verschlüsselung auch eine große Anzahl Stellen umfassen kann, beispielsweise in der Größenordnung oder gleich der Langzahl. Diese Modulo-Berechnung kann an dem endgültigen Quadrat der Langzahl durchgeführt werden. Dabei müssen jedoch sehr viele Stellen berücksichtigt werden, wodurch der Hardware-Aufwand und/oder der Zeitaufwand erhöht wird. Eine einfachere Möglichkeit, die nachfolgend beschrieben wird, kann aus der EP 443 679 A1 abgeleitet werden. Bei dieser Methode werden beliebige Langzahlen X und Y miteinander multipliziert und dabei schrittweise bezüglich des Moduls N reduziert, so daß die gesamte Anzahl Stellen aller Zwischenprodukte nicht wesentlich größer wird als die Anzahl Stellen einer Teilzahl. Dafür wird das Zweierkomplement M des Moduls N benötigt, wobei der Modul N so normiert sein muß, daß die höchstwertige Teilzahl den höchsten Wert hat, d.h. alle Stellen den Wert 1, so daß im Zweierkomplement die höchstwertige Teilzahl an allen Stellen den Wert 0 enthält.

Die Berechnung des Quadrats $X^2$ einer Langzahl $X = X_3 X_2 X_1 X_0$ modulo $N = N_3 N_2 N_1 N_0$, wobei $N_3 = b\text{-}1$ ist, verläuft dann nach folgendem Schema.

| | | | | | | | | |
|---|---|---|---|---|---|---|---|---|
| $X_3 \cdot X_3$: | Ca | $X_3 X_3$ | 0 | 0 | 0 | | | |
| $M \cdot Ca$: | | Cb | $Ca \cdot M_2$ | $Ca \cdot M_1$ | $Ca \cdot M_0$ | | | |
| Add | | $Ra_3$ | $Ra_2$ | $Ra_1$ | $Ra_0$ | | | |
| $(2X_3 + X_2) \cdot X_2$: | | $C_2$ | $2 \cdot X_3 X_2$ | $X_2 X_2$ | 0 | | | |
| Add | Cc | $Rb_3$ | $Rb_2$ | $Rb_1$ | 0 | | | |
| $M \cdot Cc$: | | | Cd | $Cc \cdot M_2$ | $Cc \cdot M_1$ | $Cc \cdot M_0$ | | |
| Add | | | $Rc_3$ | $Rc_2$ | $Rc_1$ | $Rc_0$ | | |
| $(2X_3 X_2 + X_1) \cdot X_1$: | | | $C_1$ | $2 \cdot X_3 X_1$ | $2 \cdot X_2 X_1$ | $X_1 X_1$ | | |
| Add | | | Ce | $Rd_3$ | $Rd_2$ | $Rd_1$ | 0 | |
| $M \cdot Ce$: | | | | Cf | $Ce \cdot M_2$ | $Ce \cdot M_1$ | $Ce \cdot M_0$ | |
| Add | | | | $Re_3$ | $Re_2$ | $Re_1$ | $Re_0$ | |
| $(2X_3 X_2 X_1 + X_0) \cdot X_0$: | | | | $C_0$ | $2 \cdot X_3 X_0$ | $2 \cdot X_2 X_0$ | $2 \cdot X_1 X_0$ | $X_0 X_0$ |
| Add | | | | Cg | $Rf_3$ | $Rf_2$ | $Rf_1$ | $Rf_0$ |
| $M \cdot Cg$: | | | | | Ch | $Cg \cdot M_2$ | $Cg \cdot M_1$ | $Cg \cdot M_0$ |
| | | | | | $R_3$ | $R_2$ | $R_1$ | $R_0$ |

In diesem Schema sind die einzelnen Teilprodukte und Teilsummen stellerrichtig in Spalten untereinander angeordnet, wobei jede Spalte eine Zahl mit einer Anzahl Stellen gleich der der Teilwörter hat. Dabei ist zu berücksichtigen, daß das Produkt zweier Teilwörter die doppelte Stellenzahl hat. Beispielsweise ergibt das Produkt $X_3 \cdot X_3$ eine Zahl, die zwei Teilwörter lang ist, wobei das höherwertige Teilwort mit Ca bezeichnet ist. Entsprechend ist beispielsweise in dem Produkt $Ca \cdot M_1$ das höherwertige Teilprodukt von $Ca \cdot M_0$ enthalten. Es ist zu erkennen, daß das längste Teilergebnis eine Stellenzahl gleich der Summe der Stellerzahlen des Langworts und eines Teilworts hat, wobei in bestimmten Fällen jedoch noch ein Übertrag auftreten kann. Außerdem ist die Anzahl von Übertragungen von verschiedenen Teilwörtern insbesondere aus dem Speicher 22 zur Multiplizierschaltung 10 möglichst niedrig. Wenn allerdings ein Übertrag auftritt, nachdem das höchstwertige Teilwort eines Zwischenergebnisses mit dem Zweierkomplement M des Modulos N multipliziert und zu dem Zwischenergebnis addiert wurde, muß ein Korrekturschritt eingefügt werden, bei dem von dem Zwischenergebnis, bei dem ein Übertrag aufgetreten ist, der Modulo N subtrahiert werden muß, was auch durch Addition des Zweierkomplements M des Moduls N durchgeführt werden kann. Dafür kann ein zusätzlicher (nicht dargestellter) Datenweg vom Ausgang 23 des Speichers 22 zum Addierer 20 vorgesehen werden, oder dem einem der beiden Register 14 und 16 wird der Wert 1 zugeführt, so daß ein dem anderen Register zugeführtes Datenwort unverändert am Ausgang 11 erscheint.

Zum Abschluß ist ein Programm angegeben, das die erforderlichen Verarbeitungsschritte der dargestellten Rechenschaltung und insbesondere der Steuerschaltung 24 darin zur Berechnung des Quadrats $X^2$ einer Langzahl X modulo einer weiteren Langzahl N angibt. Darin berechnet die Funktion "Result (XH,X,Y,Z,MUL2)" den Ausdruck

$$2^{MUL2} \cdot (XH \cdot b + X) \cdot Y + Z + carry$$

und liefert das Teilwort niedrigster Wertigkeit des Ergebnisses direkt zurück, während die Bits höherer Wertigkeit des Ergebnisses in der internen Variablen "carry" gehalten werden. Dieses "carry" kann mittels "ClearCarry" gelöscht und mittels "GetCarry" gelesen werden.

```
for  (i=0; i<param->XLEN; i++)
    r[i]=0;

for  (i=param->XLEN-1; i>0; i--) {

    rPtr=i-1;
    ClearCarry();
    r[rPtr]=Result(0,x[i],x[i],r[rPtr],0);        /* (XH,X,Y,Z,MUL2) */
    rPtr++;
    if (i==param->XLEN-1)
       param->CRY=GetCarry() & 1;

    for (j=i+1; j<param->XLEN; j++) {
      r[rPtr]=Result(0,x[i],x[j],r[rPtr],1);    /* (XH,X,Y,Z,MUL2) */
        rPtr++
        }
    mult=Result(0,0,0,r[rPtr],0);                 /* (XH,X,Y,Z,MUL2) */
    xh=(BYTE)GetCarry() & 3;                  /* factor for reduction */

    ClearCarry();                          /* multiply N * (xh,mult)*/
    oldBuffer=0;
    for (j=0; j<param->XLEN; j++) {
        buffer=r[j];
      r[j]=Result(xh,mult,zn[j],oldBuffer,0);   /*(XH,X,Y,Z,MUL2) */
        oldBuffer=buffer;
        }

    car=(BYTE)GetCarry() & 1;                 /* get LSB of carry */

    if (car==1) {                         /* correct if necessary */
        ClearCarry();
        for (j=0; j<param->XLEN; j++)
         r[j]=Result(0,zn[j],1,r[j];0);          /* (XH,X,Y,Z,MUL2) */
        }
    }

ClearCarry();
oldBuffer=r[0];
r[0]=Result(0,x[0],x[0],0,0);                     /* (XH,X,Y,Z,MUL2) */
for (j=1; j<param->XLEN; j++) {
    buffer=r[j];
  r[j]=Result(0,x[0],x[j],oldBuffer,1);           /* (XH,X,Y,Z,MUL2) */
    oldBuffer=buffer;
    }

mult=Result(0,0,0,oldBuffer,0);                   /* (XH,X,Y,Z,MUL2) */
xh=(BYTE)GetCarry() & 3;                     /* factor for reduction */

ClearCarry();                           /* MULTIPLY N * (xh,mult) */
for (j=0; j<param->XLEN; j++) {
    r[j]=Result(xh,mult,zn[j],r[j],0);            /* (XH,X,Y,Z,MUL2) */
    }
```

```
car=(BYTE)GetCarry() & 1;                          /* get LSB of carry */

if (car==1) {                                      /* correct if necessary */
    ClearCarry();
    for (j=0; j<param->XLEN; j++)
        r[j]=Result(0,zn[j],1,r[j],0);             /* (XH,X,Y,Z,MUL2) */
}
```

**Patentansprüche**

1. Rechenschaltung zum Berechnen des Quadrats einer ersten Zahl, die in Form einer Kette von Teilzahlen mit aneinander anschließenden Wertigkeiten und je gleicher Anzahl von Ziffern vorliegt,

   mit einer Multiplizierschaltung mit wenigstens zwei Eingängen für je eine Teilzahl und einem Ausgang zum Abgeben eines Produkts mit der doppelten Länge der Teilzahlen, zum parallelen Multiplizieren von je einer ersten und einer zweiten Teilzahl der ersten Zahl,
   mit einem Addierer mit einem Ausgang und wenigstens zwei Eingängen, von denen ein erster Eingang mit dem Ausgang der Multiplizierschaltung koppelbar ist,
   mit einem Register mit mehreren Registerzellen zum Speichern einer Mehrzahl von Teilzahlen mit einem Eingang, der mit dem Ausgang des Addierers koppelbar ist zum Empfangen eines Teilwortes und zum Speichern des Teilwortes in einer ausgewählten Registerzelle, und mit einem Ausgang, der mit dem zweiten Eingang des Addierers koppelbar ist zum Abgeben eines Teilwortes aus einer ausgewählten Registerzelle, und
   mit einer Steuerschaltung zum Steuern des aufeinanderfolgenden Zuführens von zwei Teilzahlen zur Multiplizierschaltung und zum Steuern des Addierers und des Registers zum stellenrichtigen Addieren des von der Multiplizierschaltung am Ausgang erzeugten Produktes zum Inhalt der stellenrichtigen Registerzelle des Registers,
   dadurch gekennzeichnet, daß die Multiplizierschaltung eine steuerbare Verschiebungsschaltung enthält, die zwischen einem der Eingänge und dem Ausgang angeordnet ist, um wahlweise eine Stellenverschiebung um eine Stelle nach links entsprechend einer Multiplikation mit dem Faktor 2 oder keine Stellenverschiebung vorzunehmen, und daß die Steuerschaltung eingerichtet ist, um für jede dem einen Eingang der Multiplizierschaltung zugeführte erste Teilzahl dem anderen Eingang nacheinander nur eine zweite Teilzahl gleicher oder höherer Wertigkeit zuzuführen und beim Zuführen einer zweiten Teilzahl mit höherer Wertigkeit als die der ersten Teilzahl die Verschiebungsschaltung auf eine Stellenverschiebung um eine Stelle nach links umzuschalten.

2. Rechenschaltung nach Anspruch 1, dadurch gekennzeichnet, daß zur Berechnung des Quadrats der ersten Zahl modulo einer zweiten Zahl, die ebenfalls in Form einer Kette von Teilzahlen vorliegt, von denen die Teilzahl höchster Wertigkeit den höchstmöglichen Wert hat, die Steueranordnung eingerichtet ist, um nach je einer ersten Multiplikation einer ersten Teilzahl mit allen zweiten Teilzahlen gleicher und höherer Wertigkeit, beginnend mit der ersten Teilzahl höchster Wertigkeit, zur Bildung je eines ersten Produkts dem einen Eingang des Multiplizierers die Teilzahl höchster Wertigkeit des ersten Produkts und dem anderen Eingang nacheinander die Teilzahlen des Zweierkomplements der zweiten Zahl zuzuführen zur Bildung eines zweiten Produkts aus Teilprodukten aufeinanderfolgender Wertigkeiten, und den Addierer und das Register anzusteuern, um die Teilprodukte stellenrichtig zu dem Inhalt der der Wertigkeit entsprechenden Registerzelle zu addieren.

3. Rechenschaltung nach Anspruch 2, dadurch gekennzeichnet, daß die Steuerschaltung eingerichtet ist, um das Auftreten eines Übertrags bei jedem Addieren der Teilzahl zweithöchster Wertigkeit des ersten Produkts zur höchstwertigen Teilzahl des zweiten Produkts für die Bildung einer ersten Summe zu prüfen und beim Feststellen eines solchen Übertrags vor der nächsten Addition den Addierer zum Subtrahieren der zweiten Zahl von der ersten Summe anzusteuern.

Europäisches
Patentamt

**EUROPÄISCHER RECHERCHENBERICHT**

Nummer der Anmeldung

EP 98 20 0562

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | ZURAS D: "ON SQUARING AND MULTIPLYING LARGE INTEGERS" PROCEEDINGS OF THE SYMPOSIUM ON COMPUTER ARITHMETIC, WINDSOR, JUNE 29 – JULY 2, 1993, Nr. SYMP. 11, 1993, IEEE COMPUTER SOCIETY PRESS, LOS ALAMITOS, CA., USA, Seiten 260-271, XP000419947 | 1,2 | G06F7/552 G06F7/72 |
| Y | * Seite 261, linke Spalte * --- | 3 | |
| Y,D | EP 0 443 679 A (PHILIPS NV) * das ganze Dokument * --- | 3 | |
| A | ARTS H M A M ET AL: "FLEXIBLE BLOCK-MULTIPLIER GENERATION" INTERNATIONAL CONFERENCE ON COMPUTER AIDED DESIGN. (ICCAD), SANTA CLARA, NOV. 11 – 14, 1991, Nr. CONF. 9, 11.November 1991, INSTITUTE OF ELECTRICAL AND ELECTRONICS ENGINEERS, Seiten 106-109, XP000315161 * Abbildung 4 * --- | 1 | **RECHERCHIERTE SACHGEBIETE (Int.Cl.6)** G06F |
| A | BONG D ET AL: "OPTIMIZED SOFTWARE IMPLEMENTATIONS OF THE MOLULAR EXPONENTIATION ONGENERAL PURPOSE MICROPROCESSORS" COMPUTERS & SECURITY INTERNATIONAL JOURNAL DEVOTED TO THE STUDY OF TECHNICAL AND FINANCIAL ASPECTS OF COMPUTER SECURITY, Bd. 8, Nr. 7, 1.November 1989, Seiten 621-630, XP000072275 * Seite 624 * * Seite 626, linke Spalte * ----- | 2 | |

Der vorliegende Recherchenbericht wurde für alle Patentansprüche erstellt

| Recherchenort | Abschlußdatum der Recherche | Prüfer |
|---|---|---|
| DEN HAAG | 17.April 1998 | Verhoof, P |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur ·

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)